# EUROPEAN PATENT SPECIFICATION

(11) **EP 4 376 459 B1**
(45) Date of publication and mention of the grant of the patent: **09.09.2026**
(21) Application number: 21950998.1
(22) Date of filing: 21.07.2021
(51) Int. Cl.: H04W 8/26, H04W 48/18, H04L 61/00, H04W 4/80, H04L 61/5007, H04L 101/668

(54) **WIRELESS AUDIO TRANSMISSION DEVICE, WIRELESS SOUND OUTPUT DEVICE, AND SYSTEM HAVING SAME**
DRAHTLOSE AUDIOÜBERTRAGUNGSVORRICHTUNG, DRAHTLOSE TONAUSGABEVORRICHTUNG UND SYSTEM DAMIT
DISPOSITIF DE TRANSMISSION AUDIO SANS FIL, DISPOSITIF DE PRODUCTION DE SON SANS FIL ET SYSTÈME LE COMPRENANT

(43) Date of publication of application: 29.05.2024
(73) Proprietor: LG Electronics Inc., Yeongdeungpo-gu Seoul 07336 (KR)
(72) Inventor: LEE, Jinseong, Seoul 06772 (KR)
(74) Representative: Frenkel, Matthias Alexander
(86) International application number: PCT/KR2021/009385
(87) International publication number: WO 2023/003050

(56) References cited:
- KR-A- 20140 099 194
- KR-A- 20180 129 611
- US-A1- 2014 211 777
- US-A1- 2016 227 381
- US-A1- 2018 199 164
- US-A1- 2019 268 741
- US-A1- 2019 373 217

## Description

### BACKGROUND

### 1. Field

The present disclosure relates to a wireless audio transmission device, a wireless sound output device, and a system having the same, and more particularly, to a wireless audio transmission device, a wireless sound output device, and a system having the same which can reduce the period of wireless network configuration after power on in a wireless sound output system.

### 2. Description of the Related Art

The wireless sound output device receives the audio signal wirelessly from an external wireless audio transmission device and converts the received audio signal into a sound output.

In Standard RFC-2131DHCP (hereinafter, "prior art document"), in order to set up a network between a wireless sound output device and a wireless audio transmission device, a Discover message looking for a DHCP (Dynamic Host Configuration Protocol) server is transmitted and responded to, and a request message for network address allocation is transmitted and responded to.

However, according to the prior art document, two or three more seconds are needed for network address allocation alone through the DHCP protocol, after Wi-Fi association, which has the disadvantage of causing a considerable delay in wireless sound output.

US 2016/227381 A1 discloses a method for live presentation sharing between meeting presenter's and meeting attendees' portable electronic devices during a meeting. The system comprises one or more presentation gateways each associated with a network address and configured for receiving presentation content and transmitting said presentation content to a meeting room display during a meeting. The system further includes one or more RF beacons each associated with a presentation gateway and configured for broadcasting an application identifier and a network address of the associated presentation gateway.

US 2019/268741 A1 discloses a method for providing improved automatic wireless connection to roadside access units for connection to network and access to Internet, and providing connection management to improve user experience as compared to the existing art.

### SUMMARY

It is an object of the present disclosure to provide a wireless audio transmission device, a wireless sound output device, and a system having the same which can reduce the period of wireless network configuration after power on in a wireless sound output system.

It is another object of the present disclosure to provide a wireless audio transmission device, a wireless sound output device, and a system having the same which can dynamically configure a wireless network while utilizing a beacon frame.

It is another object of the present disclosure to provide a wireless audio transmission device, a wireless sound output device, and a system having the same which can improve message transmissions for dynamically configuring a wireless network in a wireless sound output system.

According to the present invention, a wireless audio transmission device and a wireless sound output device are set forth in the independent claims. Preferred embodiments are provided in the dependent claims.

In accordance with an aspect of the present disclosure, a wireless audio transmission device includes: a transceiver configured to wirelessly transmit an audio signal to at least one wireless sound output device; and a processor configured to control the transceiver, wherein, after power on, the transceiver transmits a beacon frame including available multiple network address information, and after pairing, receives selected network address information from a paired wireless sound output device and transmits wireless audio data based on the selected network address information.

Meanwhile, the available multiple network address information may include dynamic information for the wireless sound output device to select a network. Accordingly, it is possible to dynamically configure a wireless network while utilizing a beacon frame.

Meanwhile, the transceiver may be configured to update part of the available multiple network address information after the pairing. Accordingly, it is possible to additionally configure a wireless network with the wireless sound output device.

Meanwhile, a vendor-specific element information in the beacon frame may include the available multiple network address information. Accordingly, it is possible to dynamically configure a wireless network while utilizing a beacon frame.

Meanwhile, the vendor-specific element information in the beacon frame may include network address information (Gateway IP address) of the wireless audio transmission device, bit count information to be used as a subnet mask, prefix information for the wireless sound output device to select a network, and dynamic information for the wireless sound output device to select a network.

Meanwhile, the vendor-specific element information in the beacon frame may further include network address information of a domain name service (DNS).

In accordance with another aspect of the present disclosure, a wireless sound output device includes: a transceiver configured to wirelessly receive an audio signal from a wireless audio transmission device; an audio output device configured to output sound based on the audio signal received by the transceiver; and a processor configured to control the audio output device, wherein, after power on, the transceiver receives a beacon frame including available multiple network address information from the wireless audio transmission device, and after pairing, transmits network address information selected from the available multiple network address information to the paired wireless audio transmission device and receives wireless audio data based on the selected network address information from the wireless audio transmission device.

Meanwhile, the available multiple network address information may include dynamic information for the wireless sound output device to select a network.

Meanwhile, the transceiver may be configured to select information on one of the plurality of the available multiple network addresses, based on the dynamic information for the wireless sound output device to select a network, and transmit the selected network address information to the paired wireless audio transmission device.

Meanwhile, a vendor-specific element information in the beacon frame may include the available multiple network address information. Accordingly, it is possible to dynamically configure a wireless network while utilizing a beacon frame.

Meanwhile, the vendor-specific element information in the beacon frame may include network address information (Gateway IP address) of the wireless audio transmission device, bit count information to be used as a subnet mask, prefix information for the wireless sound output device to select a network, and dynamic information for the wireless sound output device to select a network.

Meanwhile, the vendor-specific element information in the beacon frame may further include network address information of a domain name service (DNS). Accordingly, it is possible to dynamically configure a wireless network while utilizing a beacon frame.

In accordance with another aspect of the present disclosure, a wireless sound output system includes: a wireless audio transmission device; and at least one wireless sound output device, wherein, after power on, the wireless audio transmission device transmits a beacon frame including available multiple network address information, and after pairing, the wireless sound output device transmits selected network address information to the wireless audio transmission device, the wireless audio transmission device transmits wireless audio data based on the selected network address information, and the wireless sound output device outputs a sound corresponding to the received wireless audio data.

### EFFECTS OF THE DISCLOSURE

In accordance with an aspect of the present disclosure, a wireless audio transmission device includes: a transceiver configured to wirelessly transmit an audio signal to at least one wireless sound output device; and a processor configured to control the transceiver, wherein, after power on, the transceiver transmits a beacon frame including available multiple network address information, and after pairing, receives selected network address information from a paired wireless sound output device and transmits wireless audio data based on the selected network address information. Accordingly, it is possible to reduce the period of wireless network configuration after power on in the wireless sound output system

Meanwhile, the available multiple network address information may include dynamic information for the wireless sound output device to select a network. Accordingly, it is possible to dynamically configure a wireless network while utilizing a beacon frame. Moreover, it is possible to improve message transmissions for dynamically configuring a wireless network.

Meanwhile, the transceiver may be configured to update part of the available multiple network address information after the pairing. Accordingly, it is possible to additionally configure a wireless network with the wireless sound output device.

Meanwhile, a vendor-specific element information in the beacon frame may include the available multiple network address information. Accordingly, it is possible to dynamically configure a wireless network while utilizing a beacon frame.

Meanwhile, the vendor-specific element information in the beacon frame may include network address information (Gateway IP address) of the wireless audio transmission device, bit count information to be used as a subnet mask, prefix information for the wireless sound output device to select a network, and dynamic information for the wireless sound output device to select a network. Accordingly, it is possible to dynamically configure a wireless network while utilizing a beacon frame. Moreover, it is possible to improve message transmissions for dynamically configuring a wireless network.

Meanwhile, the vendor-specific element information in the beacon frame may further include network address information of a domain name service (DNS). Accordingly, it is possible to dynamically configure a wireless network while utilizing a beacon frame.

In accordance with another aspect of the present disclosure, a wireless sound output device includes: a transceiver configured to wirelessly receive an audio signal from a wireless audio transmission device; an audio output device configured to output sound based on the audio signal received by the transceiver; and a processor configured to control the audio output device, wherein, after power on, the transceiver receives a beacon frame including available multiple network address information from the wireless audio transmission device, and after pairing, transmits network address information selected from the available multiple network address information to the paired wireless audio transmission device and receives wireless audio data based on the selected network address information from the wireless audio transmission device. Accordingly, it is possible to reduce the period of wireless network configuration after power on in the wireless sound output system

Meanwhile, the available multiple network address information may include dynamic information for the wireless sound output device to select a network. Accordingly, it is possible to dynamically configure a wireless network while utilizing a beacon frame.

Meanwhile, the transceiver may be configured to select information on one of the plurality of the available multiple network addresses, based on the dynamic information for the wireless sound output device to select a network, and transmit the selected network address information to the paired wireless audio transmission device. Accordingly, it is possible to reduce the period of wireless network configuration after power on in the wireless sound output system.

Meanwhile, a vendor-specific element information in the beacon frame may include the available multiple network address information. Accordingly, it is possible to dynamically configure a wireless network while utilizing a beacon frame.

Meanwhile, the vendor-specific element information in the beacon frame may include network address information (Gateway IP address) of the wireless audio transmission device, bit count information to be used as a subnet mask, prefix information for the wireless sound output device to select a network, and dynamic information for the wireless sound output device to select a network. Accordingly, it is possible to dynamically configure a wireless network while utilizing a beacon frame. Moreover, it is possible to improve message transmissions for dynamically configuring a wireless network.

Meanwhile, the vendor-specific element information in the beacon frame may further include network address information of a domain name service (DNS). Accordingly, it is possible to dynamically configure a wireless network while utilizing a beacon frame.

In accordance with another aspect of the present disclosure, a wireless sound output system includes: a wireless audio transmission device; and at least one wireless sound output device, wherein, after power on, the wireless audio transmission device transmits a beacon frame including available multiple network address information, and after pairing, the wireless sound output device transmits selected network address information to the wireless audio transmission device, the wireless audio transmission device transmits wireless audio data based on the selected network address information, and the wireless sound output device outputs a sound corresponding to the received wireless audio data. Accordingly, it is possible to reduce the period of wireless network configuration after power on in the wireless sound output system.

### BRIEF DESCRIPTION OF THE DRAWINGS

FIG. 1 illustrates an outer appearance of an image display system according to an embodiment of the present disclosure;
FIG. 2 is an internal block diagram of the image display apparatus of FIG. 1;
FIG. 3 is an internal block diagram of a controller of the image display apparatus of FIG. 2;
FIG. 4A is a view illustrating a method of controlling a remote control device of the image display apparatus of FIG. 2;
FIG. 4B is an internal block diagram of the remote control device of the image display apparatus of FIG. 2;
FIG. 5 is a diagram referenced to describe the image display system shown in FIG. 1.
FIG. 6A is an example of a block diagram of a wireless audio transmission device in the wireless audio system shown in FIG. 1.
FIG. 6B is an example of a block diagram of a wireless audio transmission device in the wireless audio system shown in FIG. 1.
FIG. 7 is a view illustrating sound output according to wireless network configuration after power on.
FIG. 8 is a flowchart illustrating an operation method of a wireless audio system according to an embodiment of the present disclosure.
FIGS. 9A to 10C are diagrams referred to to describe the operation shown in FIG. 8.
FIG. 11 is a flowchart illustrating an operation method of a wireless audio system according to another embodiment of the present disclosure.

### DETAILED DESCRIPTION OF THE PREFERRED EMBODIMENTS

Reference will now be made in detail to the preferred embodiments of the present disclosure, examples of which are illustrated in the accompanying drawings.

The suffixes "module" and "unit" in elements used in description below are given only in consideration of ease in preparation of the specification and do not have specific meanings or functions. Therefore, the suffixes "module" and "unit" may be used interchangeably.

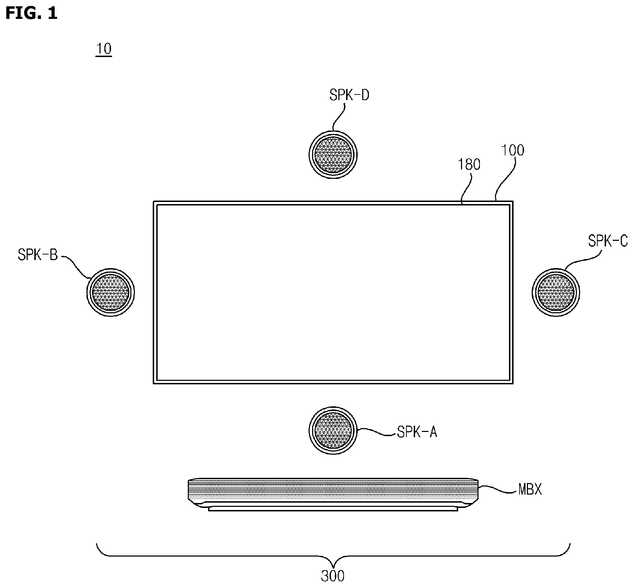

FIG. 1 illustrates an outer appearance of an image display system according to an embodiment of the present disclosure.

Referring to FIG. 1, an image display system 10 according to an embodiment of the present disclosure may include an image display device 100 and a wireless sound output system 300.

The image display device 100 may include a display 180.

The image display device 100 may receive an image signal from external various devices, process the signal, and display this on the display 180.

The external various devices may be a computer (PC), a mobile terminal 600 such as a smartphone, a set top box (STB), a game console (GSB), a server (SVR), and the like, for example.

Meanwhile, the display 180 may be implemented by any one of various panels. For example, the display 180 may be one of an organic light luminescent panel (OLED panel), an inorganic light luminescent panel (LED panel), a micro LED panel, and the like.

The wireless sound output system 300 according to an embodiment of the present disclosure may include a wireless audio transmission device MBX and a plurality of wireless sound output devices SPK-A to SPK-D.

Among the plurality of wireless sound output devices SPK-A to SPK-D, the first wireless sound output device SPK-A may be a front wireless speaker, the second and third wireless sound output devices SPK-B and SPK-C may be a left wireless speaker and a right wireless speaker, respectively, and the fourth sound output device SPK-D may be a rear wireless speaker.

For example, the wireless audio transmission device MBX may be a signal processing device, and may divide an audio signal and an image signal input from the exterior, transmit the image signal to the image display device 100 in wireless or wired manner, and transmit the audio signal to the plurality of wireless sound output devices SPK-A to SPK-D.

Accordingly, based on a radio environment, the images may be watched using the image display device 100, and the sounds may be listened by the plurality of wireless sound output devices SPK-A to SPK-D.

Meanwhile, in the case that the plurality of wireless sound output devices SPK-A to SPK-D and the wireless audio transmission device MBX are powered on, wireless pairing of the plurality of wireless sound output devices SPK-A to SPK-D and the wireless audio transmission device MBX is performed, and network addresses are allocated.

In this case, in a case where network addresses are allocated through the DHCP protocol, a considerable amount of time is needed, causing a considerable delay in wireless sound output.

In this regard, an embodiment of the present disclosure proposes a method for reducing the period of wireless network configuration after power on in a wireless sound output system.

To this end, a wireless sound output system 300 according to an embodiment of the present disclosure includes a wireless audio transmission device MBX and at least one wireless sound output device SPK-A to SPK-D. After power on, the wireless audio transmission device MBX transmits a beacon frame including available multiple network address information, and after pairing, the wireless sound output device SPK-A to SPK-D transmits selected network address information to the wireless audio transmission device MBX. Then, the wireless audio transmission device MBX transmits wireless audio data based on the selected network address information, and the wireless sound output device SPK-A to SPK-D outputs a sound corresponding to the received wireless audio data. Accordingly, it is possible to reduce the period of wireless network configuration after power on in the wireless sound output system 300.

Meanwhile, the wireless audio transmission device MBX according to an embodiment of the present disclosure includes a transceiver 635 configured to wirelessly transmit an audio signal to at least one wireless sound output device SPK-A to SPK-D and a processor 670 configured to control the transceiver 635. After power on, the transceiver 635 transmits a beacon frame including available multiple network address information, and after pairing, it receives selected network address information from a paired wireless sound output device SPK-A to SPK-D and transmits wireless audio data based on the selected network address information. Accordingly, it is possible to reduce the period of wireless network configuration after power on in the wireless sound output system 300.

Meanwhile, the wireless sound output device SPK-A to SPK-D according to an embodiment of the present disclosure includes a transceiver 735 configured to wirelessly receive an audio signal from the wireless audio transmission device MBX, an audio output device 785 configured to output sound based on the audio signal received by the transceiver 735, and a processor 770 configured to control the audio output device 785. After power on, the transceiver 735 receives a beacon frame including available multiple network address information from the wireless audio transmission device MBX, and after pairing, it transmits network address information selected from the available multiple network address information to the paired wireless audio transmission device MBX and receives wireless audio data from the wireless audio transmission device MBX based on the selected network address information. Accordingly, it is possible to reduce the period of wireless network configuration after power on in the wireless sound output system 300.

Meanwhile, the image display device 100 shown in FIG. 1 may be a TV, a monitor, a tablet PC, a mobile terminal, a display device for a vehicle, and the like.

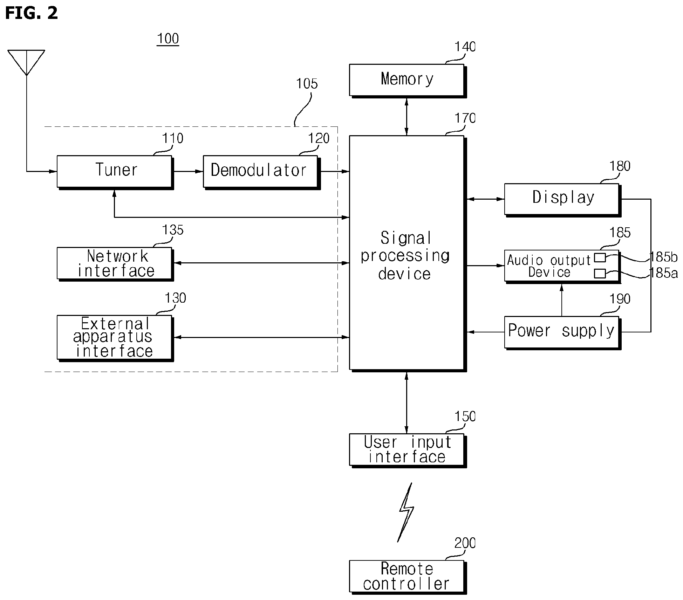

FIG. 2 is an internal block diagram of the image display apparatus of FIG. 1.

Referring to FIG. 2, the image display apparatus 100 according to an embodiment of the present disclosure may include an image receiver 105, an external device interface 130, a memory 140, a user input interface 150, a sensor device (not shown), a signal processing device 170, a display 180, and an audio output device 185.

The image receiver 105 may include a tuner 110, a demodulator 120, a network interface 135, and an external device interface 130.

Meanwhile, unlike the drawing, the image receiver 105 may include only the tuner 110, the demodulator 120, and the external device interface 130. That is, the image receiver 105 may not include the network interface 135.

The tuner 110 selects a radio frequency (RF) broadcast signal corresponding to a channel selected by a user or all prestored channels from among RF broadcast signals received through an antenna (not shown). In addition, the tuner 110 converts the selected RF broadcast signal into an intermediate frequency (IF) signal, a baseband image, or an audio signal.

To receive broadcast signals of a plurality of channels, a plurality of tuners 110 may be provided. Alternatively, a single tuner to receive broadcast signals of a plurality of channels simultaneously may be provided.

The demodulator 120 receives and demodulates the DIF signal converted by the tuner 110.

After performing demodulation and channel decoding, the demodulator 120 may output a transport stream (TS) signal. Herein, the stream signal may be a signal obtained by multiplexing an image signal, an audio signal, and a data signal.

The TS signal output from the demodulator 120 may be input to the signal processing device 170. After performing demultiplexing and image/audio signal processing, the signal processing device 170 outputs an image to the display 180 and audio to the audio output device 185.

The external device interface 130 may transmit or receive data to or from an external device connected thereto (not shown). To this end, the external device interface 130 may include an audio/video (A/V) input/output device (not shown).

The external device interface 130 may be connected to external devices such as a digital versatile disc (DVD), a Blu-ray player, a game console, a camera, a camcorder, a (notebook) computer, and a set-top box in a wired/wireless manner and perform input/output operations with external devices.

The A/V input/output device may receive image and audio signals from an external device. The wireless transceiver (not shown) may perform short-range wireless communication with other electronic devices.

By using the wireless transceiver (not shown), the external device interface 130 may exchange data with a neighboring mobile terminal. Specifically, the external device interface 130 may receive device information, information of an executed application, an application image, and the like, in a mirroring mode.

The network interface 135 provides an interface for connecting the image display apparatus 100 with a wired/wireless network including the Internet. For example, the network interface 135 may receive content or data provided by an Internet or content provider or a network operator over a network.

Meanwhile, the network interface 135 may include a wireless transceiver (not shown).

The memory 140 may store programs for processing and control of signals in the signal processing device 170 and also store a signal-processed image, audio, or data signal.

The memory 140 may function to temporarily store an image signal, an audio signal, or a data signal input through the external device interface 130. In addition, the memory 140 may store information about a predetermined broadcast channel through the channel memorization function such as a channel map.

While an embodiment in which the memory 140 is provided separately from the signal processing device 170 is illustrated in FIG. 2, embodiments of the present disclosure are not limited thereto. The memory 140 may be included in the signal processing device 170.

The user input interface 150 may transmit a signal input by a user to the signal processing device 170 or transmit a signal from the signal processing device 170 to the user.

For example, the user input interface 150 may transmit/receive user input signals such as power on/off, channel selection, and screen window setting to/from the remote control device 200 or transmit user input signals input through local keys (not shown) such as a power key, a channel key, a volume key, or a setting key to the signal processing device 170. The user input interface 150 may transmit user input signals input through a sensor device (not shown) to sense gesture of the user to the signal processing device 170 or transmit a signal from the signal processing device 170 to the sensor device (not shown).

The signal processing device 170 may demultiplex the TS signal input through the tuner 110, the demodulator 120, the network interface 135, or the external device interface 130 or process the demultiplexed signal to generate a signal for outputting an image or audio.

For example, the signal processing device 170 may receive a broadcasting signal or an HDMI signal received from the image receiver 105 and perform a signal processing based on the received broadcasting signal or HDMI signal to output the signal processed image signal.

The image signal processed by the signal processing device 170 may be input to the display 180 such that an image corresponding to the image signal may be displayed on the display. In addition, the image signal processed by the signal processing device 170 may be input to an external output device through the external device interface 130.

The audio signal processed by the signal processing device 170 may be output to the audio output device 185 in the form of sound. In addition, the audio signal processed by the signal processing device 170 may be input to an external output device through the external device interface 130.

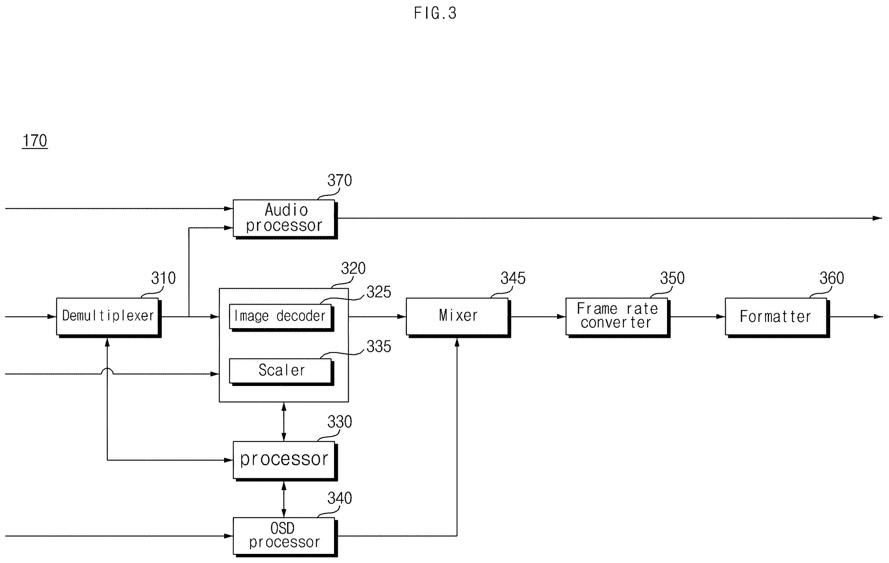

Although not shown in FIG. 2, the signal processing device 170 may include a demultiplexer and an image processor. That is, the signal processing device 170 may perform various types of signal processing, and accordingly, may be implemented in a system on chip (SOC) format, which will be described with reference to FIG. 3 later.

Additionally, the signal processing device 170 may control an overall operation of the image display apparatus 100. For example, the signal processing device 170 may control the tuner 110 to tune to an RF broadcast corresponding to a channel selected by the user or a prestored channel.

The signal processing device 170 may control the image display apparatus 100 according to a user command input through the user input interface 150 or according to an internal program.

The signal processing device 170 may control the display 180 to display an image. Herein, the image displayed on the display 180 may be a still image, a moving image, a 2D image, or a 3D image.

The signal processing device 170 may control such that a predetermined object is displayed in an image displayed on the display 180. For example, the object may be at least one of an accessed web page (a newspaper, a magazine, etc.), an electronic program guide (EPG), various menus, a widget, an icon, a still image, a moving image, or text.

The signal processing device 170 may recognize the location of the user based on an image captured by a capture device (not shown). For example, the signal processing device 170 may recognize the distance between the user and the image display apparatus 100 (i.e., a z-axis coordinate). Additionally, the signal processing device 170 may recognize an x-axis coordinate and y-axis coordinate in the display 180, corresponding to the location of the user.

The display 180 generates drive signals by converting an image signal, a data signal, an on-screen display (OSD) signal, and a control signal processed by the signal processing device 170 or an image signal, a data signal, and a control signal received from the external device interface 130.

The display 180 may include a touchscreen and may function as an input device as well as an output device.

The audio output device 185 receives an audio signal processed by the signal processing device 170 and outputs audio.

A capture device (not shown) captures an image of the user. The capture device (not shown) may be implemented using one camera. However, embodiments of the present disclosure are not limited thereto and the capture device (not shown) may be implemented using a plurality of cameras. Information about the image captured by the capture device (not shown) may be input to the signal processing device 170.

The signal processing device 170 may sense user gestures based on the image captured by the capture device (not shown), the signal sensed by the sensor device (not shown), or a combination thereof.

The power supply 190 supplies power to overall parts of the image display apparatus 100. In particular, the power supply 190 may supply power to the signal processing device 170, which may be implemented in the form of system-on-chip (SOC), the display 180 for displaying images, and the audio output device 185 for outputting audio signals.

Specifically, the power supply 190 may include a converter for converting alternating current (AC) power into direct current (DC) power and a DC-DC converter for changing the level of the DC power.

The remote control device 200 transmits a user input signal to the user input interface 150. To this end, the remote control device 200 may use Bluetooth, RF communication, infrared (IR) communication, ultra-wideband (UWB), or ZigBee. In addition, the remote control device 200 may receive an image signal, an audio signal, or a data signal from the user input interface 150 and then display or audibly output the received signal.

The image display apparatus 100 may be a fixed or mobile digital image receiver capable of receiving a digital broadcast.

FIG. 2 is a block diagram of the image display apparatus 100 according to an embodiment of the present disclosure. Some of the constituents of the image display apparatus shown in the diagram may be combined or omitted or other constituents may be added thereto, according to specifications of the image display apparatus 100 as actually implemented. That is, two or more constituents of the image display apparatus 100 may be combined into one constituent or one constituent thereof may be subdivided into two or more constituents, as needed. In addition, a function performed in each block is simply illustrative and specific operations or units of the block do not limit the scope of the present disclosure.

FIG. 3 is an internal block diagram of the controller shown in FIG. 2.

Referring to FIG. 3, the signal processing device 170 according to an embodiment of the present disclosure may include a demultiplexer 310, an image processor 320, a processor 330, and an audio processor 370. The signal processing device 170 may further include a data processor (not shown).

The demultiplexer 310 demultiplexes an input TS signal. For example, when an MPEG-2 TS signal is input, the demultiplexer 310 may demultiplex the MPEG-2 TS signal into an image signal, an audio signal, and a data signal. Herein, the TS signal input to the demultiplexer 310 may be a TS signal output from the tuner 110, the demodulator 120, or the external device interface 130.

The image processor 320 may perform signal processing on the input image signal. For example, the image processor 320 may perform image processing on the demultiplexed image signal from the demultiplexer 310.

To this end, the image processor 320 may include an image decoder 325, a scaler 335, an image quality processor (not shown), an image encoder (not shown), an OSD processor 340, a frame rate converter 350, and a formatter 360.

The image decoder 325 decodes the demultiplexed image signal, and the scaler 335 scales the resolution of the decoded image signal for outputting the image signal through the display 180.

The video decoder 325 may be provided with decoders that operate in conformance to various standards. For example, the video decoder 325 may include, for example, an MPEG-2 decoder, an H.264 decoder, a 3D video decoder for a color image a depth image, a decoder for multi-view images, and so on.

The scaler 335 may scale a received image signal which is decoded by the image decoder 325.

For example, when the size or resolution of a received image signal is small and low, the scaler 335 may upscale the received image signal. When the size or resolution of a received image signal is great and high, the scaler 335 may downscale the received image signal.

The image quality processor (not shown) may perform image quality processing based on a received image signal which is decoded by the image decoder 325.

For example, the image quality processor (not shown) may reduce noise of a received image signal, extend grayscale of the received image signal, enhance image resolution, perform High Dynamic Range (HDR)-based signal processing, change a frame rate, or perform image quality processing to corresponding to characteristics of a panel, especially, an organic light emitting panel.

The OSD processor 340 generates an OSD signal autonomously or according to a user input signal. For example, the OSD processor 340 may generate a signal for displaying a variety of information in the form of graphics or texts on the screen of the display 180 based on a user input signal. The generated OSD signal may include a variety of data such as a user interface screen, various menu screens, a widget, and an icon of the image display apparatus 100. The generated OSD signal may also include a 2D object or a 3D object.

The OSD processor 340 may generate a pointer which can be displayed on the display, based on a pointing signal input from the remote control device 200. In particular, the pointer may be generated by a pointing signal processing device (not shown) and the OSD processor 240 may include the pointing signal generator (not shown). Obviously, it is possible to provide the pointing signal processing device (not shown) separately from the OSD processor 240.

The frame rate converter (FRC) 350 may convert the frame rate of an input image. The FRC 350 may also directly output the input image without frame rate conversion.

The formatter 360 may change the format of a received image signal to an image signal to be displayed on the display.

Particularly, the formatter 360 may change the format of a received image signal to correspond to characteristics of a display panel.

The processor 330 may control overall operations in the image display apparatus 100 or the signal processing device 170.

For example, the processor 330 may control the tuner unit 110 to tune to an RF broadcast signal corresponding to a user-selected channel or a pre-stored channel.

The processor 330 may control the image display apparatus 100 according to a user command received through the user input interface 150 or according to an internal program.

In addition, the processor 330 may control data transmission through the network interface 135 or the external device interface 130.

In addition, the processor 330 may control operations of the demultiplexer 310 and the image processor 320 in the signal processing device 170.

An audio processor 370 in the signal processing device 170 may process the demultiplexed audio signal. To this end, the audio processor 370 may include various decoders.

The audio processor 370 in the signal processing device 170 may perform processing such as adjustment of bass, treble, and volume.

The data processor (not shown) in the signal processing device 170 may perform data processing on the demultiplexed data signal. For example, if the demultiplexed data signal is a coded data signal, the data processor (not shown) may decode the data signal. The coded data signal may be EPG information containing broadcast information such as a start time and end time of a broadcast program broadcast on each channel.

The block diagram of the signal processing device 170 shown in FIG. 3 is simply illustrative. Constituents of the block diagram may be integrated, added or omitted according to the specifications of the signal processing device 170 as actually implemented.

In particular, the frame rate converter 350 and the formatter 360 may be provided separately from the image processor 320.

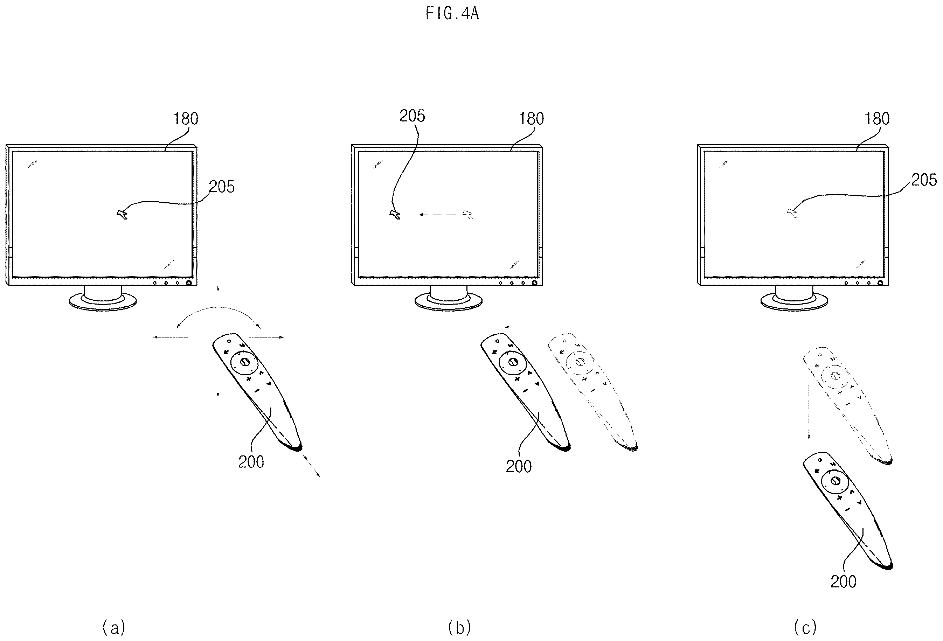

FIG. 4A is a view illustrating a method of controlling the remote control device shown in FIG. 2.

As shown in FIG. 4A(a), a pointer 205 corresponding to the remote control device 200 may be displayed on the display 180.

A user may move the remote control device 200 up and down, left and right (FIG. 4A(b)), or back and forth (FIG. 4A(c)) or rotate the same. The pointer 205 displayed on the display 180 of the image display apparatus moves according to movement of the remote control device 200. As shown in the figure, since the pointer 205 moves according to movement of the remote control device 200 in a 3D space, the remote control device 200 may be referred to as a spatial remote control device or a 3D pointing device.

FIG. 4A(b) illustrates a case in which the pointer 205 displayed on the display 180 moves to the left when the user moves the remote control device 200 to the left.

Information about movement of the remote control device 200 sensed through a sensor of the remote control device 200 is transmitted to the image display apparatus. The image display apparatus may calculate coordinates of the pointer 205 based on the information about the movement of the remote control device 200. The image display apparatus may display the pointer 205 such that the pointer 205 corresponds to the calculated coordinates.

FIG. 4A(c) illustrates a case in which the user moves the remote control device 200 away from display 180 while pressing down a specific button on the remote control device 200. In this case, a selected area on the display 180 corresponding to the pointer 205 may be zoomed in and displayed with a magnified size. On the contrary, when the user moves the remote control device 200 closer to the display 180, the selected area may be zoomed out and displayed with a reduced size. Alternatively, the selected area may be zoomed out when the remote control device 200 is moved away from the display 180 and may be zoomed in when the remote control device 200 is moved closer to the display 180.

Up-and-down and left-and-right movements of the remote control device 200 may not be recognized while the specific button on the remote control device 200 is pressed down. That is, when the remote control device 200 moves away from the display 180 or approaches the display 180, the up-and-down and left-and-right movements of the remote control device 200 may not be recognized and only a back-and-forth movement of the remote control device 200 may be recognized. If the specific button on the remote control device 200 is not pressed down, only the pointer 205 moves according to the up-and-down and left-and-right movements of the remote control device 200.

The speed and direction of movement of the pointer 205 may correspond to the speed and direction of movement of the remote control device 200.

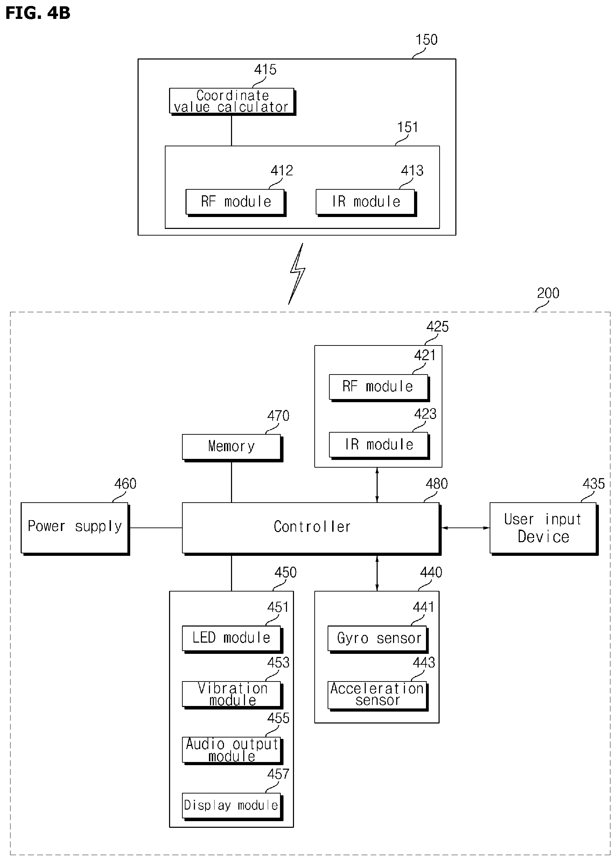

FIG. 4B is an internal block diagram of the remote control device shown in FIG. 2.

Referring to the drawings, the remote control device 200 may include a wireless transceiver 425, a user input device 435, a sensor device 440, an output unit 450, a power supply 460, a memory 470, a signal processing device 480.

The wireless transceiver 425 transmits and receives signals to and from one of the image display apparatuses according to embodiments of the present disclosure described above. Hereinafter, one image display apparatus 100 among the image display apparatuses according to embodiments of the present disclosure will be described by way of example.

In this embodiment, the remote control device 200 may include an RF module 421 capable of transmitting and receiving signals to and from the image display apparatus 100 according to an RF communication standard. The remote control device 200 may further include an IR module 423 capable of transmitting and receiving signals to and from the image display apparatus 100 according to an IR communication standard.

In this embodiment, the remote control device 200 transmits a signal containing information about movement of the remote control device 200 to the image display apparatus 100 via the RF module 421.

In addition, the remote control device 200 may receive a signal from the image display apparatus 100 via the RF module 421. As needed, the remote control device 200 may transmit commands related to power on/off, channel change, and volume change to the image display apparatus 100 via the IR module 423.

The user input device 435 may include a keypad, buttons, a touchpad, or a touchscreen. The user may input a command related to the display apparatus 100 to the remote control device 200 by manipulating the user input device 435. If the user input device 435 includes a hard key button, the user may input a command related to the image display apparatus 100 to the remote control device 200 by pressing the hard key button. If the user input device 435 includes a touchscreen, the user may input a command related to the image display apparatus 100 to the remote control device 200 by touching a soft key on the touchscreen. The user input device 435 may include various types of input means such as a scroll key and a jog key which can be manipulated by the user and this embodiment does not limit the scope of the present disclosure.

The sensor device 440 may include a gyro sensor 441 or an acceleration sensor 443. The gyro sensor 441 may sense information about movement of the remote control device 200.

For example, the gyro sensor 441 may sense information about movement of the remote control device 200 with respect to the X, Y and Z axes. The acceleration sensor 443 may sense information about the movement speed of the remote control device 200. The sensor device 440 may further include a distance measurement sensor to sense a distance to the display 180.

The output device 450 may output an image signal or audio signal corresponding to manipulation of the user input interface 435 or the signal transmitted by the image display apparatus 100. The user may recognize, via the output device 450, whether the user input interface 435 is manipulated or the image display apparatus 100 is controlled.

For example, the output device 450 may include an LED module 451 to be turned on, a vibration module 453 to generate vibration, a sound output module 455 to output sound, or a display module 457 to output an image, when the user input interface 435 is manipulated or signals are transmitted to and received from the image display apparatus 100 via the wireless transceiver 425.

The power supply 460 supplies power to the remote control device 200. If the remote control device 200 does not move for a predetermined time, the power supply 460 may stop supplying power to reduce waste of power. The power supply 460 may resume supply of power when a predetermined key provided to the remote control device 200 is manipulated.

The memory 470 may store various types of programs and application data necessary for control or operation of the remote control device 200. When the remote control device 200 wirelessly transmits and receives signals to and from the image display apparatus 100 via the RF module 421, the remote control device 200 and the image display apparatus 100 may transmit and receive signals in a predetermined frequency band. The signal processing device 480 of the remote control device 200 may store, in the memory 470, information about a frequency band enabling wireless transmission and reception of signals to and from the image display apparatus 100 which is paired with the remote control device 200, and reference the information.

The signal processing device 480 controls overall operation related to control of the remote control device 200. The signal processing device 480 may transmit a signal corresponding to manipulation of a predetermined key in the user input device 435 or a signal corresponding to movement of the remote control device 200 sensed by the sensor device 440 to the image display apparatus 100 via the wireless transceiver 425.

The user input interface 150 of the image display apparatus 100 may include a wireless transceiver 151 capable of wirelessly transmitting and receiving signals to and from the remote control device 200 and a coordinate calculator 415 capable of calculating coordinates of a pointer corresponding to operation of the remote control device 200.

The user input interface 150 may wirelessly transmit and receive signals to and from the remote control device 200 via an RF module 412. In addition, the user input interface 150 may receive, via an IR module 413, a signal transmitted from the remote control device 200 according to an IR communication standard.

The coordinate calculator 415 may calculate a coordinate value (x, y) of the pointer 205 to be displayed on the display 180 by correcting hand shaking or errors in a signal corresponding to operation of the remote control device 200, which is received via the wireless transceiver 151 .

The signal which is transmitted by the remote control device 200 and input to the image display apparatus 100 via the user input interface 150 is transmitted to the signal processing device 170 of the image display apparatus 100. The signal processing device 170 may determine information about an operation of the remote control device 200 or manipulation of a key from the signal transmitted by the remote control device 200 and control the image display apparatus 100 based on the information.

As another example, the remote control device 200 may calculate a coordinate value of a pointer corresponding to movement thereof and output the coordinate value to the user input interface 150 of the image display apparatus 100. In this case, the user input interface 150 of the image display apparatus 100 may transmit, to the signal processing device 170, information about the received coordinate value of the pointer without separately correcting hand tremor or errors.

As another example, the coordinate calculator 415 may be provided in the signal processing device 170 rather than in the user input interface 150 as opposed to FIG. 4B.

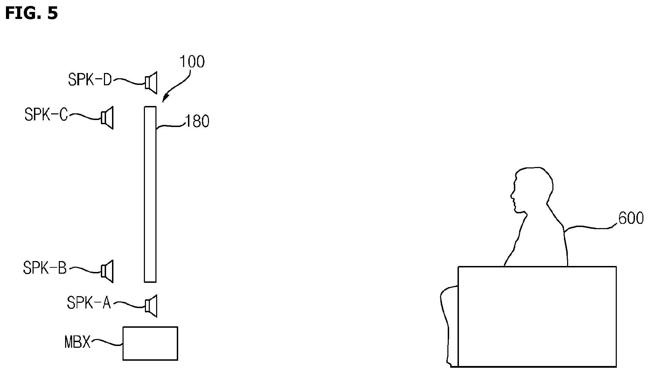

FIG. 5 is a diagram referenced to describe the image display system shown in FIG. 1.

Referring to FIG. 5, based on display 180 of the image display device 100 of the image system 10 according to the present disclosure, among the plurality of wireless sound output devices SPK-A to SPK-D, the first wireless sound output device SPK-A may be a front wireless speaker, the second and third wireless sound output devices SPK-B and SPK-C may be a left wireless speaker and a right wireless speaker, respectively, and the fourth sound output device SPK-D may be a rear wireless speaker.

Accordingly, a user 600 may watch images using the display 180 and also listen to the front sound, the left sound, the right sound, and the rear sound through the plurality of wireless sound output devices SPK-A to SPK-D.

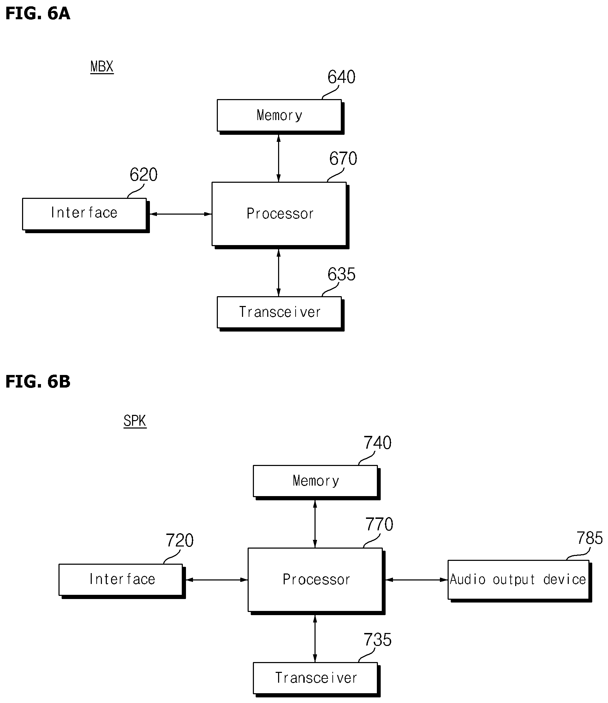

FIG. 6A is an example of a block diagram of a wireless audio transmission device in the wireless audio system shown in FIG. 1.

Referring to FIG. 6A, the wireless audio transmission device MBX according to an embodiment of the present disclosure may include an interface 620, a memory 640, a transceiver 635, and a processor 670.

The interface 620 may receive an image signal or an audio signal from a connected external device (e.g., a set top box).

The memory 640 may store the program for signal processing and control in the wireless audio transmission device MBX and store the signal processed image signal or audio signal.

The transceiver 635 may perform wireless communication and perform wireless communication with the external image display device 100 or the external plurality of wireless sound output devices SPK-A to SPK-D.

For example, the transceiver 635 may transmit an audio signal to the plurality of wireless sound output devices SPK-A to SPK-D through Wi-Fi communication.

After power on, the transceiver 635 transmits a beacon frame including available multiple network address information, and after pairing, it receives selected network address information from a paired wireless sound output device SPK-A to SPK-D and transmits wireless audio data based on the selected network address information. Accordingly, it is possible to reduce the period of wireless network configuration after power on in the wireless sound output system 300.

Meanwhile, after the pairing, the transceiver 635 may be configured to update part of the available multiple network address information. Accordingly, it is possible to additionally configure a wireless network with the wireless sound output device SPK-A to SPK-D.

The processor 670 may control each unit in the wireless audio transmission device MBX. Specifically, the processor 670 may control the transceiver 635.

For example, the processor 670 may signal processing of the audio signal received from the exterior and control such that the signal processed audio signal is transmitted to the plurality of wireless sound output devices SPK-A to SPK-D.

Meanwhile, after power on, the processor 670 may control to transmit a beacon frame including available multiple network address information, and after pairing, it may control to receive selected network address information from a paired wireless sound output device SPK-A to SPK-D and transmit wireless audio data based on the selected network address information.

Meanwhile, after the pairing, the processor 670 may control to update part of the available multiple network address information.

Although it is not shown in the drawing, the wireless audio transmission device MBX may operate as a woofer. Accordingly, the wireless audio transmission device MBX may further include an audio output device (not shown).

FIG. 6B is an example of a block diagram of a wireless audio transmission device in the wireless audio system shown in FIG. 1.

Referring to FIG. 6A, each SPK of the plurality of wireless sound output devices SPK-A to SPK-D according to an embodiment of the present disclosure may include an interface 720, a memory 740, a transceiver 735, a processor 770, and an audio output device 785.

The interface 720 may receive power or data from a connected external device.

The memory 740 may store the program for signal processing and perform control in the wireless sound output device SPK and store the signal processed image signal or audio signal.

The transceiver 735 may perform wireless communication and perform wireless communication with the wireless audio transmission device MBX or the external plurality of wireless sound output devices SPK-A to SPK-D.

For example, the transceiver 735 may receive an audio signal to the wireless audio transmission device MBX through Wi-Fi communication.

For another example, the transceiver 735 may transmit data to another wireless sound output devices SPK-A to SPK-D or receive data therefrom.

Meanwhile, after power on, the transceiver 735 receives a beacon frame including available multiple network address information from the wireless audio transmission device MBX, and after pairing, it transmits network address information selected from the available multiple network address information to the paired wireless audio transmission device MBX and receives wireless audio data from the wireless audio transmission device MBX based on the selected network address information. Accordingly, it is possible to reduce the period of wireless network configuration after power on in the wireless sound output system 300.

Meanwhile, the transceiver 735 may be configured to select information on one of the plurality of the available multiple network addresses, based on the dynamic information 1026 for the wireless sound output device SPK-A to SPK-D to select a network, and transmit the selected network address information to the paired wireless audio transmission device MBX. Accordingly, it is possible to reduce the period of wireless network configuration after power on in the wireless sound output system 300.

Meanwhile, after power on, the processor 770 may control to receive a beacon frame including available multiple network address information from the wireless audio transmission device MBX, and after pairing, it may control to transmit network address information selected from the available multiple network address information to the paired wireless audio transmission device MBX and receive wireless audio data from the wireless audio transmission device MBX based on the selected network address information.

Meanwhile, the processor 770 may control to select information on one of the plurality of the available multiple network addresses, based on the dynamic information 1026 for the wireless sound output device SPK-A to SPK-D to select a network, and control to transmit the selected network address information to the paired wireless audio transmission device MBX.

The audio output device 785 outputs a sound corresponding to wireless audio data received from the wireless audio transmission device MBX based on the selected network address information.

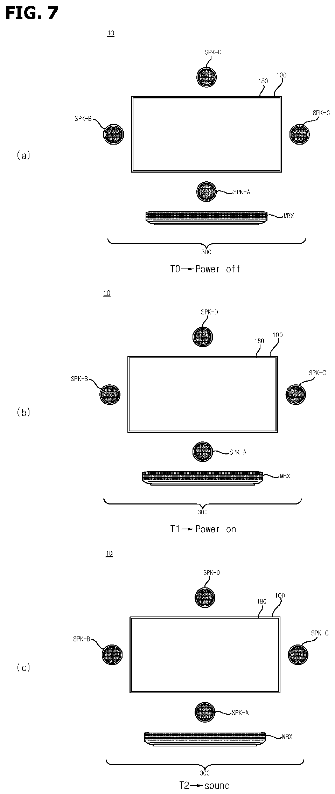

FIG. 7 is a view illustrating sound output according to wireless network configuration after power on.

(a) of FIG. 7 shows an example of power-off of wireless sound output system 300.

Referring to the drawing, the wireless audio transmission device MBX and the plurality of wireless sound output devices SPK-A to SPK-D, within the wireless sound output system 300, may be in a power-off state at time T0.

(b) of FIG. 7 shows an example of power-on of wireless sound output system 300.

Referring to the drawing, the wireless audio transmission device MBX and the plurality of wireless sound output devices SPK-A to SPK-D, within the wireless sound output system 300, may be in a power-on state at time T1.

(c) of FIG. 7 shows an example of sound output by a wireless sound output system 300.

Referring to the drawing, the wireless audio transmission device MBX and the plurality of wireless sound output devices SPK-A to SPK-D, within the wireless sound output system 300, may be paired wirelessly after power on.

Meanwhile, after the wireless pairing, the plurality of wireless sound output devices SPK-A to SPK-D are allocated with respective wireless networks. Also, at time T2, the plurality of wireless sound output devices SPK-A to SPK-D each may output a sound corresponding to received wireless audio data according to their allocated wireless network address.

Meanwhile, in a case where the DHCP protocol is used when allocating a network address between the plurality of wireless sound output devices SPK-A to SPK-D and the wireless audio transmission device MBX, two or three more seconds are needed, causing a considerable delay in wireless sound output.

In this regard, an embodiment of the present disclosure provides a method in which a beacon frame including available multiple network address information is used to allocate a network address between the plurality of wireless sound output devices SPK-A to SPK-D and the wireless audio transmission device MBX.

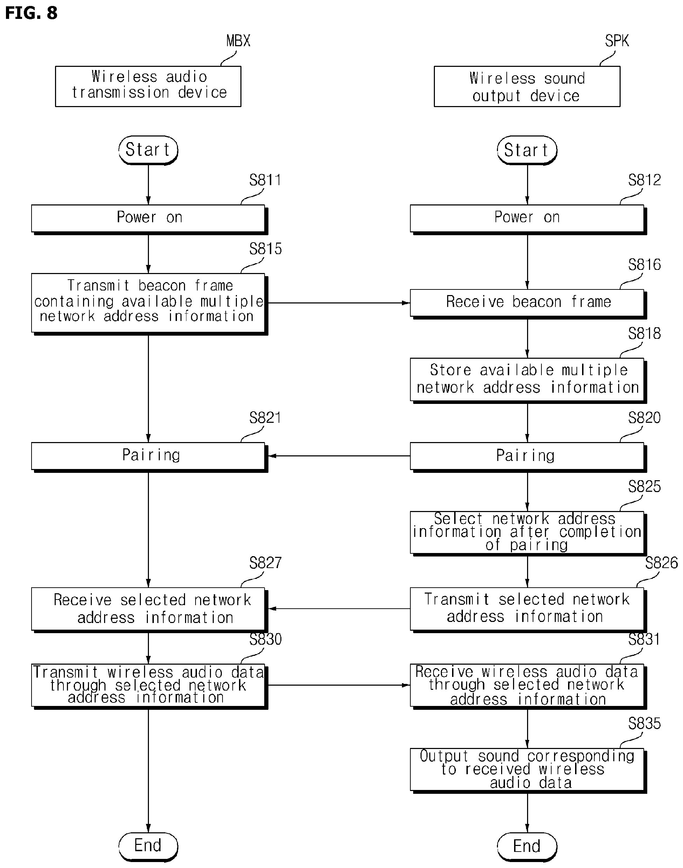

For example, a method may be proposed, in which a beacon frame for WiFi communication is used, when the plurality of wireless sound output devices SPK-A to SPK-D and the wireless audio transmission device MBX are paired wirelessly via WiFi. This will be described in more detail with reference to FIG. 8 and the following drawings.

FIG. 8 is a flowchart illustrating an operation method of a wireless audio system according to an embodiment of the present disclosure.

Referring to the drawing, the wireless audio transmission device MBX in the wireless sound output system 300 according to an embodiment of the present disclosure is powered on based on a power-on signal (S811).

For example, when a power button in the wireless audio transmission device MBX is operated, or upon receiving a remote control signal indicating power-on, the wireless audio transmission device MBX is powered on. Accordingly, the transceiver 635, the processor 670, etc. in the wireless audio transmission device MBX are activated.

Meanwhile, the wireless sound output device SPK within the wireless audio system 300 according to an embodiment of the present disclosure is powered on based on a power-on signal (S812).

For example, when a power button in the wireless sound output device SPK is operated, or upon receiving a remote control signal indicating power-on, the wireless sound output device SPK is powered on. Accordingly, the transceiver 735, the processor 770, etc. in the wireless sound output device SPK are activated.

Next, after power on, the wireless audio transmission device MBX transmits a beacon frame including available multiple network address information (S815).

For example, after power on, the transceiver 635 of the wireless audio transmission device MBX may transmit a beacon frame including available multiple network address information repeatedly in one session.

Meanwhile, the available multiple network address information may include dynamic information for the wireless sound output device SPK-A to SPK-D to select a network.

In this case, the beacon frame may be repeatedly transmitted at intervals of approximately 100 ms to 1 sec.

In response to this, the transceiver 735 in the wireless sound output device SPK receives a beacon frame including available multiple network address information from the wireless audio transmission device MBK (S816).

The transceiver 735 or processor 770 in the wireless sound output device SPK may store in the memory 740 the received available multiple network address information (S818).

Next, the transceiver 735 in the wireless sound output device SPK may perform wireless pairing (S820). In response to this, the transceiver 635 of the wireless audio transmission device MBX also may perform wireless pairing (S821).

For example, the transceiver 735 in the wireless sound output device SPK may transmit a pairing request signal for wireless pairing, and the transceiver 635 of the wireless audio transmission device MBX may transmit a pairing response signal in response to the pairing request signal.

For another example, the transceiver 635 of the wireless audio transmission device MBX may transmit a pairing request signal for wireless pairing, and the transceiver 735 in the wireless sound output device SPK may transmit a pairing response signal in response to the pairing request signal.

Based on such an exchange of the pairing request signal and the pairing response signal, the wireless pairing of the wireless sound output device SPK and the wireless audio transmission device MBX may be completed. For example, the wireless pairing used herein may be WiFi-based wireless pairing.

Meanwhile, after the pairing, the transceiver 635 of the wireless audio transmission device MBX may be configured to update part of the available multiple network address information.

For example, for another wireless audio transmission device, part of the available multiple network address information may be varied, and the varied available multiple network address information may be outputted. Accordingly, it is possible to additionally configure a wireless network with another wireless sound output device.

Meanwhile, after completion of the wireless pairing, the transceiver 735 in the wireless sound output device SPK may be configured to select network address information which is information on one of the stored available multiple network addresses (S825).

After completion of the wireless pairing, the transceiver 735 in the wireless sound output device SPK may transmit the selected network address information (S826).

In response to this, the transceiver 635 of the wireless audio transmission device MBX may receive the selected network address information from the wireless sound output device SPK (S827).

Meanwhile, in a case where network address information is allocated based on DHCP, a four-stage or four-way handshake needs to be used, which includes transmitting a DHCP discover message by the wireless sound output device SPK, transmitting a response message to the DHCP discover message by the wireless audio transmission device MBX, transmitting a network address allocation request message by the wireless sound output device SPK, and transmitting a response message containing available network address information by the wireless audio transmission device MBX.

Accordingly, it takes approximately two or three seconds to allocate network address information based on DHCP.

However, according to an embodiment of the present disclosure, if available multiple network address information is contained in a periodically transmitted beacon frame, it takes approximately 200 ms or less to allocate network address information. Accordingly, it is possible to considerably reduce the period of wireless network configuration after power on in the wireless sound output system 300. An improvement of about 90 % can be achieved.

The transceiver 635 of the wireless audio transmission device MBX transmits wireless audio data by using the received network address information (S830).

In response to this, the transceiver 735 in the wireless sound output device SPK may receive wireless audio data (S831), the processor 770 in the wireless sound output device SPK may signal-process the wireless audio data, and the audio output device 785 in the wireless sound output device SPK may output a sound corresponding to the received wireless audio data (S835). Accordingly, it is possible to output sound based on the selected network address information.

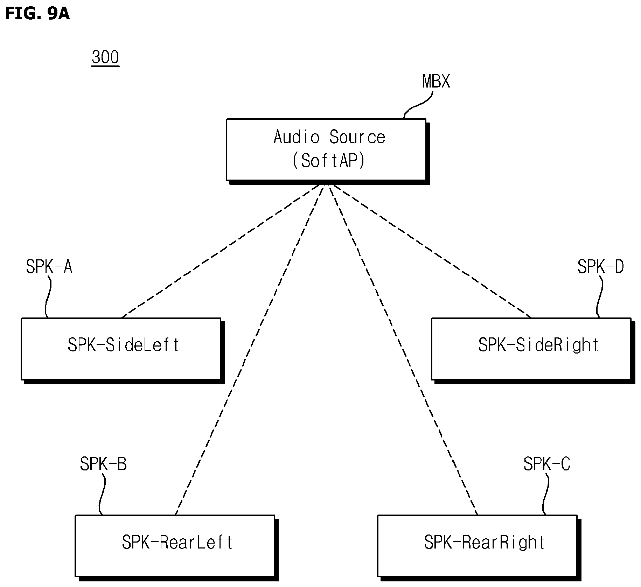

FIGS. 9A to 10C are diagrams referred to to describe the operation shown in FIG. 8.

First, FIG. 9A is a diagram illustrating the wireless audio transmission device MBX and the plurality of wireless sound output devices SPKA-A to SPK-D, within the wireless sound output system 300 according to an embodiment of the present disclosure.

Among the plurality of wireless sound output devices SPK-A to SPK-D, the first wireless sound output device SPK-A may be the front left sound output device, the second wireless sound output device SPK-B may be the rear left sound output device, the third wireless sound output device SPK-C may be the rear right sound output device, and the fourth wireless sound output device SPK-D may be the front right sound output device.

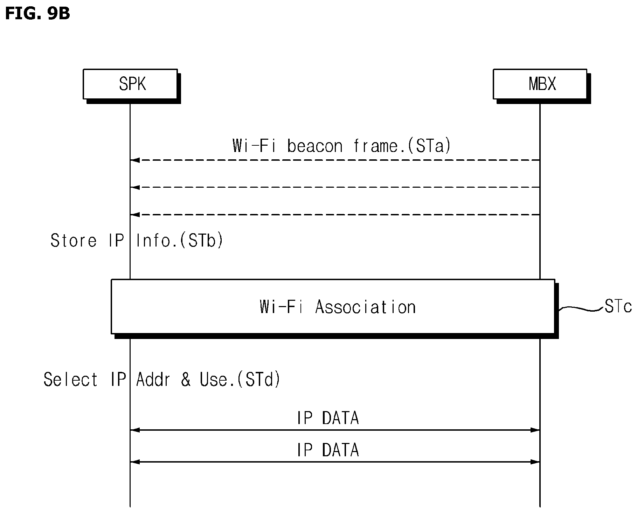

FIG. 9B is a diagram illustrating an example of a signal flow between the wireless audio transmission device MBX and one wireless sound output devices SPK, within the wireless sound output system 300 according to an embodiment of the present disclosure.

Referring to the drawing, after power on, the transceiver 635 of the wireless audio transmission device MBX may transmit a beacon frame including available multiple network address information repeatedly in one session (STa). Although the drawing shows the number of transmissions is three in one session, it may be varied.

Specifically, available multiple network address information may be included in a vendor-specific element information within the beacon frame, and the transceiver 635 of the wireless audio transmission device MBX may transmit the vendor-specific element information containing the multiple network address information.

In response to this, the transceiver 735 of the wireless sound output device SPK receives a beacon frame in a scanning interval for Wi-Fi association, and extracts and stores IP address information, which is available multiple network address information within the vendor-specific element information in the beacon frame (STb).

Next, the transceiver 735 of the wireless sound output device SPK performs Wi-Fi association, and in response to this, the transceiver 635 of the wireless audio transmission device MBX also performs Wi-Fi association (STc).

Accordingly, a Wi-Fi connection between the transceiver 735 of the wireless sound output device SPK and the transceiver 635 of the wireless audio transmission device MBX is completed.

Next, the transceiver 735 of the wireless sound output device SPK selects and uses IP address information of a specific network address, among the IP addresses which are available multiple network addresses (STd).

In this case, the transceiver 735 of the wireless sound output device SPK may dynamically select and use information on a specific network address, rather than information on a fixed IP address.

Thus, compared to using fixed IP address information, the functions of a wireless audio channel of the wireless sound output device SPK may be set as desired, and if necessary, the audio channel configuration may be changed. Also, it may be extended into a multi-room audio system.

Accordingly, the transceiver 735 of the wireless sound output device SPK may transmit IP address information of a selected specific network address to the transceiver 635 of the wireless audio transmission device MBX.

Next, the transmission and reception of wireless audio data are performed between the transceiver 635 of the wireless audio transmission device MBX and the transceiver 735 of the wireless sound output device SPK, by using the selected specific network address information. Consequently, a sound corresponding to the wireless audio data is outputted through the wireless sound output device SPK.

Meanwhile, such a WiFi-based allocation of a dynamic network address requires no protocol change and can be implemented using the existing beacon frames and therefore require the replacement of WiFi chipsets.

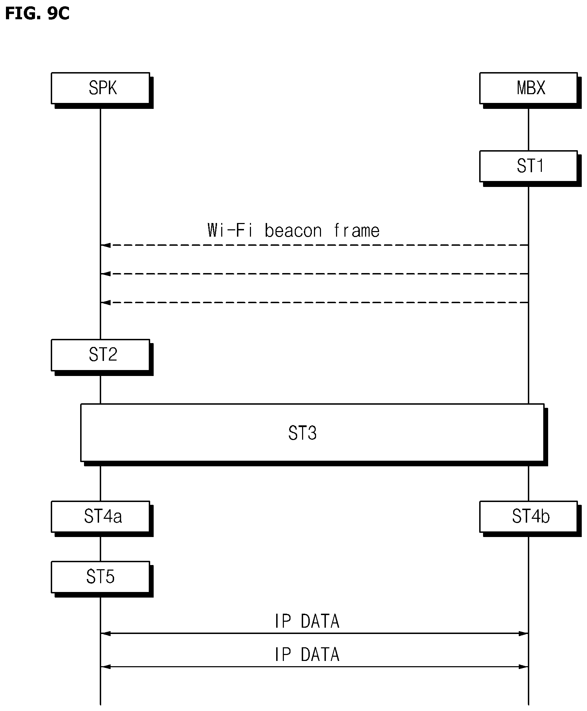

FIG. 9C is a diagram illustrating another example of a signal flow between the wireless audio transmission device MBX and one wireless sound output devices SPK, within the wireless sound output system 300 according to an embodiment of the present disclosure.

Referring to the drawing, after power on, the transceiver 635 of the wireless audio transmission device MBX may transmit a beacon frame including available multiple network address information repeatedly in one session (ST1).

Specifically, available multiple network address information may be included in a vendor-specific element information within the beacon frame, and the transceiver 635 of the wireless audio transmission device MBX may transmit the vendor-specific element information containing the multiple network address information.

In response to this, the transceiver 735 of the wireless sound output device SPK receives a beacon frame in a scanning interval for Wi-Fi association, and extracts and stores IP address information, which is available multiple network address information within the vendor-specific element information in the beacon frame (ST2).

Next, the transceiver 735 of the wireless sound output device SPK performs Wi-Fi association, and in response to this, the transceiver 635 of the wireless audio transmission device MBX also performs Wi-Fi association (ST3).

Next, the transceiver 735 of the wireless sound output device SPK selects and uses IP address information of a specific network address, among the IP addresses which are available multiple network addresses (ST4a).

Meanwhile, upon completion of Wi-Fi association or upon completion of wireless pairing, the transceiver 635 of the wireless audio transmission device MBX may be configured to update a prefix for network selection within the available multiple network address information (ST4b). Accordingly, it is possible to additionally configure a wireless network with the wireless sound output device SPK-A to SPK-D.

Meanwhile, the transceiver 735 of the wireless sound output device SPK may perform the configuration by using IP address information of a selected specific network address (ST5).

For example, the transceiver 735 of the wireless sound output device SPK may configure an IP address, a gateway address, a subnet mask, and a DNS.

Meanwhile, the transceiver 735 of the wireless sound output device SPK may transmit IP address information of a selected specific network address to the transceiver 635 of the wireless audio transmission device MBX.

Next, the transmission and reception of wireless audio data are performed between the transceiver 635 of the wireless audio transmission device MBX and the transceiver 735 of the wireless sound output device SPK, by using the selected specific network address information. Consequently, a sound corresponding to the wireless audio data is outputted through the wireless sound output device SPK.

Meanwhile, such a WiFi-based allocation of a dynamic network address requires no protocol change and can be implemented using the existing beacon frames and therefore require the replacement of WiFi chipsets.

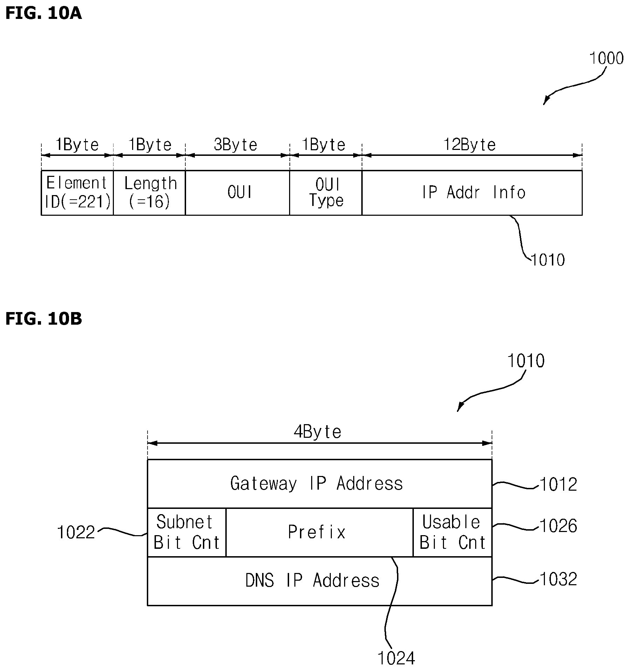

FIG. 10A is a view illustrating a vendor-specific element information 1000 in a beacon frame.

Referring to the drawing, the vendor-specific element information 1000 in the beacon frame may contain 1 byte of ID information (Element ID), 1 byte of length information, 3 bytes of OUI information, 1 byte of OUI type information, and 12 bytes of available multiple network address information (IP address information) 1010.

FIG. 10B is a view illustrating the available multiple network address information (IP address information) 1010 in FIG. 10A.

Referring to the drawing, the available multiple network address information (IP address information) 1010 may include 4 bytes of network address information (Gateway IP address) 1012 of the wireless audio transmission device MBX, 1 byte of bit count information (subnet bit count) (1022) to be used as a subnet mask, 2 bytes of prefix information 1024 for the wireless sound output device SPK to select a network, and 1 byte of dynamic information (usable bit count) 1026 for the wireless sound output device SPK to select a network.

The bit count information (subnet bit count) 1022 to be used as a subnet mask represents bit count information to be used as a subnet mask, among the network address information (gateway IP address) of the wireless audio transmission device MBX.

Meanwhile, the prefix information 1024 for network selection for the wireless sound output device SPK represents a prefix to be used to configure a network (IP), except the subnet.

Meanwhile, the dynamic information 1026 for the wireless sound output device SPK to select a network represents the last bits that can be dynamically and randomly set to configure a network (IP).

Meanwhile, the vendor-specific element information 1000 within the beacon frame may optionally further include 4 bytes of network address (IP address) information 1032 of a domain name service (DNS).

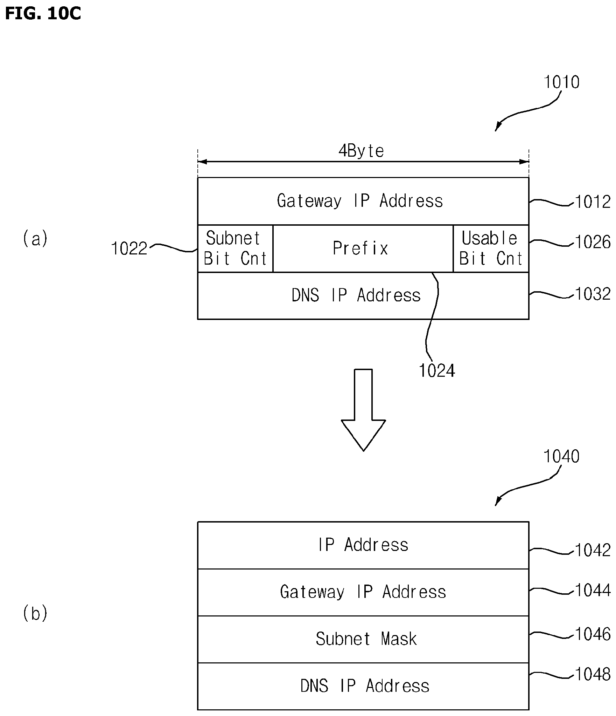

FIG. 10C is a view illustrating available multiple network address information (IP address information) 1010 received by the wireless sound output device SPK.

Referring to the drawing, the transceiver 735 of the wireless sound output device SPK may receive available multiple network address information (IP address information) 1010.

As described above, the available multiple network address information (IP address information) 1010 may contain 4 bytes of network address information (Gateway IP address) 1012 of the wireless audio transmission device MBX, 1 byte of bit count information (subnet bit count) (1022) to be used as a subnet mask, 2 bytes of prefix information 1024 for network selection for the wireless sound output device SPK, and 1 byte of dynamic information (usable bit count) 1026 for the wireless sound output device SPK to select a network.

Meanwhile, as described above, the available multiple network address information (IP address information) 1010 may optionally further include network address (IP address) information 1032 of a domain name service (DNS).

Meanwhile, the transceiver 735 of the wireless sound output device SPK may allocate such a network address as shown in (b) of FIG. 10C, by using the received available multiple network address information (IP address information) 1010.

For example, if the bit count information (subnet bit count) (1022) to be used as a subnet mask is 16, the subnet mask may be set to 255.255.0,0 (=0xFF, 0xFF, 0x00, 0x00).

Meanwhile, the transceiver 735 of the wireless sound output device SPK uses information on a part of the network addresses (gateway IP addresses) 1012 of the wireless audio transmission device MBX as a front part of an IP to be used as a subnet mask, and generates a rear part of the IP by using the prefix information 1024.

Also, the transceiver 735 of the wireless sound output device SPK may be configured to select a random value within the dynamic information (usable bit count) 1026 for network selection based on the IP.

Also, the transceiver 735 of the wireless sound output device SPK may change the prefix information 1024 for the sake of the next connection.

For example, if the received network address information (gateway IP address) 1022 is "192.168.255.254", the bit count information (subnet bit count) 1022 is "16", the prefix information 1024 is "35,40", and the dynamic information (usable bit count) 1026 is "3", the transceiver 735 of the wireless sound output device SPK may set the network address information (gateway IP address) 1012 to "192.168.255.254", the subnet mask information to "255.255.0.0", and temporary network address information to "192.168.x.x" + "x.x.35.40"= "192.168.35.40".

And, the transceiver 735 of the wireless sound output device SPK may be configured to select a random value from 0 to 7 within the dynamic information (usable bit count) 1026 and set the selected network address information to "192.168.35.4x".

Also, the transceiver 735 of the wireless sound output device SPK sets the next prefix information 1024 to "40 + 2^(usable bit count=3)=48".

Accordingly, it is possible to dynamically configure a wireless network while utilizing a beacon frame. Subsequently, it is possible to reduce the period of wireless network configuration after power on in the wireless sound output system 300.

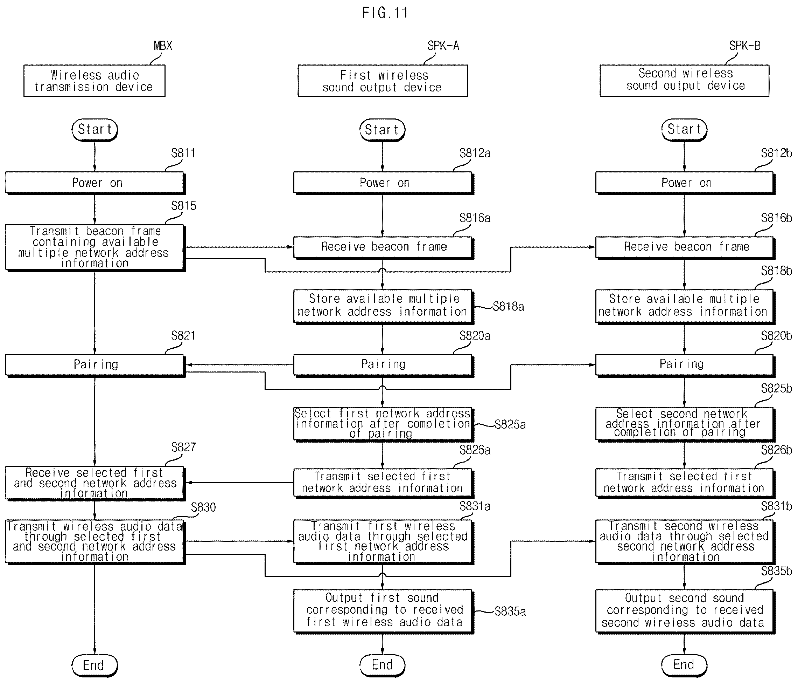

Meanwhile, although FIGS. 8 to 10C have been illustrated with respect to the wireless audio transmission device MBX and one wireless sound output device SPK, it is also possible to dynamically allocate a wireless network address between the wireless audio transmission device MBX and a plurality of wireless sound output devices. This will be described with reference to FIG. 11 and the following drawings.

FIG. 11 is a flowchart illustrating an operation method of a wireless audio system according to another embodiment of the present disclosure.

Referring to the drawing, the wireless audio transmission device MBX in the wireless audio system 300 according to another embodiment of the present disclosure is powered on based on a power-on signal (S811).

Accordingly, the transceiver 635, the processor 670, etc. in the wireless audio transmission device MBX are activated.

Meanwhile, the first wireless sound output device SPK-A within the wireless audio system 300 according to the embodiment of the present disclosure is powered on based on a power-on signal (S812a).

Accordingly, the transceiver 735, the processor 770, etc. in the first wireless sound output device SPK-A are activated.

Meanwhile, the second wireless sound output device SPK-B within the wireless audio system 300 according to the embodiment of the present disclosure is powered on based on a power-on signal (S812b).

Accordingly, the transceiver 735, the processor 770, etc. in the second wireless sound output device SPK-B are activated.

Next, after power on, the wireless audio transmission device MBX transmits a beacon frame including available multiple network address information (S815).

For example, after power on, the transceiver 635 of the wireless audio transmission device MBX may transmit a beacon frame including available multiple network address information repeatedly in one session.

In this case, the beacon frame may be repeatedly transmitted at intervals of approximately 100 ms to 1 sec.

In response to this, the transceiver 735 in the first wireless sound output device SPK-A receives a beacon frame including available multiple network address information from the wireless audio transmission device MBK (S816a).

Similarly, in response to this, the transceiver 735 in the second wireless sound output device SPK-B receives a beacon frame including available multiple network address information from the wireless audio transmission device MBK (S816b).

The transceiver 735 or processor 770 in the first wireless sound output device SPK-A may store in the memory 740 the received available multiple network address information (S818a).

Similarly, the transceiver 735 or processor 770 in the second wireless sound output device SPK-B may store in the memory 740 the received available multiple network address information (S818b).

Next, the transceiver 735 in the first wireless sound output device SPK-A may perform wireless pairing (S820a). In response to this, the transceiver 635 of the wireless audio transmission device MBX also may perform wireless pairing (S821).

Similarly, the transceiver 735 in the second wireless sound output device SPK-B may perform wireless pairing (S820b). In response to this, the transceiver 635 of the wireless audio transmission device MBX also may perform wireless pairing (S821).

That is, the wireless audio transmission device MBX may be wirelessly paired with the first wireless sound output device SPK-A and the second wireless sound output device SPK-B. That is, the wireless audio transmission device MBX may be wirelessly paired with the first wireless sound output device SPK-A and the second wireless sound output device SPK-B through multi-pairing.

Meanwhile, after completion of the wireless pairing, the transceiver 735 in the first wireless sound output device SPK-A may be configured to select first network address information which is information on one of the stored available multiple network addresses (S825a).

And, after completion of the wireless pairing, the transceiver 735 in the first wireless sound output device SPK-A may transmit the selected first network address information (S826a). As described above, a random value may be selected from 0 to 7 within the dynamic information (usable bit count) 1026, and the selected first network address information corresponding to the selected random value may be transmitted.

Similarly, after completion of the wireless pairing, the transceiver 735 in the second wireless sound output device SPK-B may be configured to select second network address information which is information on one of the stored available multiple network addresses (S825b).

And, after completion of the wireless pairing, the transceiver 735 in the second wireless sound output device SPK-B may transmit the selected second network address information (S826b). As described above, a random value may be selected from 0 to 7 within the dynamic information (usable bit count) 1026, and the selected second network address information corresponding to the selected random value may be transmitted.

In response to this, the transceiver 635 of the wireless audio transmission device MBX may receive the selected first network address information from the first wireless sound output device SPK-A and receive the selected second network address information from the second wireless sound output device SPK-B (S827).

Meanwhile, in a case where the selected first network address information and the selected second network address information are different, the transceiver 635 of the wireless audio transmission device MBX transmits wireless audio data by using the received network address information (S830).

For example, in a case where the selected first network address information and the selected second network address information are identical, even with the selection of a random value, the transceiver 635 of the wireless audio transmission device MBX may re-transmit different available multiple network address information to the first wireless sound output device SPK-A and the second wireless sound output device SPK-B.

Accordingly, the first wireless sound output device SPK-A and the second wireless sound output device SPK-B may re-allocate network address information, and as a result, first network address information and second network address information, which are different from each other, may be received.

For another example, in a case where the selected first network address information and the selected second network address information are identical, even with the selection of a random value, the transceiver 635 of the wireless audio transmission device MBX may transmit a message to the first wireless sound output device SPK-A and the second wireless sound output device SPK-B, requesting to re-allocate network address information.

Accordingly, the first wireless sound output device SPK-A and the second wireless sound output device SPK-B may re-allocate network address information, and as a result, first network address information and second network address information, which are different from each other, may be received.

And, the transceiver 635 of the wireless audio transmission device MBX transmits first wireless audio data and second wireless audio data, by using the received first network address information and the received second network address information, which are different from each other (S830).

In response to this, the transceiver 735 in the first wireless sound output device SPK-A may receive the first wireless audio data (S831a), and the processor 770 in the first wireless sound output device SPK-A may signal-process the wireless audio data, and the audio output device 785 in the first wireless sound output device SPK-A may output a first sound corresponding to the received first wireless audio data (S835a).

Similarly, the transceiver 735 in the second wireless sound output device SPK-B may receive the second wireless audio data (S831b), and the processor 770 in the second wireless sound output device SPK-B may signal-process the wireless audio data, and the audio output device 785 in the second wireless sound output device SPK-B may output a second sound corresponding to the received second wireless audio data (S835b).

Accordingly, it is possible to output the first sound and the second sound, based the selected first and second network address information.

While the present disclosure has been particularly shown and described with reference to exemplary embodiments thereof, it will be understood by those of ordinary skill in the art that various changes in form and detail may be made within the scope of the present invention as defined by the following claims.

## Claims

1. A wireless audio transmission device (MBX) comprising:
a transceiver (635) configured to wirelessly transmit an audio signal to at least one wireless sound output device; and
a processor (670) configured to control the transceiver,
wherein, after power on, the transceiver (635) is configured to transmit a beacon frame including available multiple network address information on a plurality of available network addresses, and after pairing, is configured to receive selected network address information from a paired wireless sound output device and is configured to transmit wireless audio data based on the selected network address information.

2. The wireless audio transmission device of claim 1, wherein the available multiple network address information includes dynamic information for the wireless sound output device to select a network.

3. The wireless audio transmission device of any one of claims 1 to 2, wherein the transceiver (635) is configured to update part of the available multiple network address information after the pairing.

4. The wireless audio transmission device of any one of claims 1 to 3, wherein a vendor-specific element information in the beacon frame includes the available multiple network address information.

5. The wireless audio transmission device of claim 4, wherein the vendor-specific element information in the beacon frame includes network address information (Gateway IP address) of the wireless audio transmission device, bit count information to be used as a subnet mask, prefix information for the wireless sound output device to select a network, and dynamic information for the wireless sound output device to select a network.

6. The wireless audio transmission device of claim 5, wherein the vendor-specific element information in the beacon frame further includes network address information of a domain name service, DNS.

7. A wireless sound output device (SPK-A~SPK-D) comprising:
a transceiver (735) configured to wirelessly receive an audio signal from a wireless audio transmission device;
an audio output device (785) configured to output sound based on the audio signal received by the transceiver; and
a processor (770) configured to control the audio output device,
wherein, after power on, the transceiver (735) is configured to receive a beacon frame including available multiple network address information on a plurality of available network addresses from the wireless audio transmission device, and after pairing, is configured to transmit network address information selected from the available multiple network address information to the paired wireless audio transmission device and is configured to receive wireless audio data based on the selected network address information from the wireless audio transmission device.

8. The wireless sound output device of claim 7, wherein the available multiple network address information includes dynamic information for the wireless sound output device to select a network.

9. The wireless sound output device of claim 8, wherein the transceiver (735) is configured to select information on one of the plurality of the available multiple network addresses, based on the dynamic information for the wireless sound output device to select a network, and transmit the selected network address information to the paired wireless audio transmission device.

10. The wireless sound output device of any one of claims 7 to 9, wherein a vendor-specific element information in the beacon frame includes the available multiple network address information.

11. The wireless sound output device of claim 10, wherein the vendor-specific element information in the beacon frame includes network address information (Gateway IP address) of the wireless audio transmission device, bit count information to be used as a subnet mask, prefix information for the wireless sound output device to select a network, and dynamic information for the wireless sound output device to select a network.

12. The wireless sound output device of claim 11, wherein the vendor-specific element information in the beacon frame further includes network address information of a domain name service (DNS).

13. A wireless sound output system (300) comprising:
a wireless audio transmission device (MBX) of any one of claims 1 to 6; and
at least one wireless sound output device (SPK-A~SPK-D),
wherein, after power on, the wireless audio transmission device is configured to transmit a beacon frame including available multiple network address information, and after pairing, the wireless sound output device is configured to transmit selected network address information to the wireless audio transmission device, the wireless audio transmission device is configured to transmit wireless audio data based on the selected network address information, and the wireless sound output device is configured to output a sound corresponding to the received wireless audio data.

14. The wireless sound output system of claim 13, wherein the wireless sound output device includes the wireless sound output device of any one of claims 7 to 12.

## Patentansprüche

1. Drahtloses Audioübertragungsgerät (MBX), umfassend:
einen Transceiver (635), der so konfiguriert ist, dass er ein Audiosignal drahtlos an mindestens ein drahtloses Tonausgabegerät überträgt; und
einen Prozessor (670), der so konfiguriert ist, dass er den Transceiver steuert,
wobei der Transceiver (635) so ausgelegt ist, dass er nach dem Einschalten einen Beacon-Frame sendet, der Informationen über mehrere verfügbare Netzwerkadressen enthält, und nach dem Pairing so ausgelegt ist, dass er ausgewählte Netzwerkadressinformationen von einem gepaarten drahtlosen Tonausgabegerät empfängt und drahtlose Audiodaten auf der Grundlage der ausgewählten Netzwerkadressinformationen sendet.

2. Drahtlose Audioübertragungsgerät nach Anspruch 1, wobei die Informationen über mehrere verfügbare Netzwerkadressen dynamische Informationen enthalten, anhand derer das drahtlose Tonausgabegerät ein Netzwerk auswählen kann.

3. Drahtloses Audioübertragungsgerät nach einem der Ansprüche 1 bis 2, wobei der Transceiver (635) so konfiguriert ist, dass er nach dem Pairing einen Teil der Informationen über mehrere verfügbare Netzwerkadressen aktualisiert.

4. Drahtloses Audioübertragungsgerät nach einem der Ansprüche 1 bis 3, wobei eine herstellerspezifische Elementinformation im Beacon-Frame die verfügbaren mehreren Netzwerkadressinformationen umfasst.

5. Drahtloses Audioübertragungsgerät nach Anspruch 4, wobei die herstellerspezifischen Elementinformationen in dem Beacon-Frame Netzwerkadressinformationen (Gateway-IP-Adresse) des drahtlosen Audioübertragungsgeräts, Bitanzahlsinformationen, die als Subnetzmaske verwendet werden sollen, Präfixinformationen für das drahtlose Tonausgabegerät zur Auswahl eines Netzwerks sowie dynamische Informationen für das drahtlose Tonausgabegerät zur Auswahl eines Netzwerks umfassen.

6. Drahtloses Audioübertragungsgerät nach Anspruch 5, wobei die herstellerspezifischen Elementinformationen im Beacon-Frame ferner Netzwerkadressinformationen eines Domain Name Service, DNS, enthalten.

7. Drahtloses Tonausgabegerät (SPK-A~SPK-D), umfassend:
einen Transceiver (735), der so konfiguriert ist, dass er ein Audiosignal von einem drahtlosen Audioübertragungsgerät drahtlos empfängt;
ein Audioausgabegerät (785), das so konfiguriert ist, dass es auf der Grundlage des vom Transceiver empfangenen Audiosignals Ton ausgibt; und
einen Prozessor (770), der so konfiguriert ist, dass er das Audioausgabegerät steuert,
wobei der Transceiver (735) so ausgelegt ist, dass er nach dem Einschalten einen Beacon-Frame empfängt, der Informationen über mehrere verfügbare Netzwerkadressen enthält, und nach dem Pairing so ausgelegt ist, dass er Netzwerkadressinformationen, die aus den Informationen über mehrere verfügbare Netzwerkadressen ausgewählt wurden, an das gepaarte drahtlose Audioübertragungsgerät überträgt und drahtlose Audiodaten auf der Grundlage der ausgewählten Netzwerkadressinformationen von dem drahtlosen Audioübertragungsgerät empfängt.

8. Drahtloses Tonausgabegerät nach Anspruch 7, wobei die Informationen über mehrere verfügbare Netzwerkadressen dynamische Informationen für das drahtlose Tonausgabegerät zur Auswahl eines Netzwerks umfassen.

9. Drahtloses Tonausgabegerät nach Anspruch 8, wobei der Transceiver (735) so konfiguriert ist, dass er auf der Grundlage der dynamischen Informationen für das drahtlose Tonausgabegerät zur Auswahl eines Netzwerks Informationen zu einer der mehreren verfügbaren Netzwerkadressen auswählt und die ausgewählten Netzwerkadressinformationen an das gepaarte drahtlose Audioübertragungsgerät überträgt.

10. Drahtloses Tonausgabegerät nach einem der Ansprüche 7 bis 9, wobei eine herstellerspezifische Elementinformation im Beacon-Frame die Informationen über die mehreren verfügbaren Netzwerkadressen umfasst.

11. Drahtloses Tonausgabegerät nach Anspruch 10, wobei die herstellerspezifischen Elementinformationen im Beacon-Frame Netzwerkadressinformationen (Gateway-IP-Adresse) des drahtlosen Audioübertragungsgeräts, Bitanzahlsinformationen, die als Subnetzmaske verwendet werden sollen, Präfixinformationen für das drahtlose Tonausgabegerät zur Auswahl eines Netzwerks sowie dynamische Informationen für das drahtlose Tonausgabegerät zur Auswahl eines Netzwerks enthalten.

12. Drahtloses Tonausgabegerät nach Anspruch 11, wobei die herstellerspezifischen Elementinformationen im Beacon-Frame ferner Netzwerkadressinformationen eines Domain Name Service (DNS) enthalten.

13. Drahtloses Tonausgabesystem (300), umfassend:
ein drahtloses Audioübertragungsgerät (MBX) gemäß einem der Ansprüche 1 bis 6; und
mindestens ein drahtloses Tonausgabegerät (SPK-A bis SPK-D),
wobei das drahtlose Audioübertragungsgerät so konfiguriert ist, dass es nach dem Einschalten einen Beacon-Frame sendet, der Informationen zu mehreren verfügbaren Netzwerkadressen enthält, und wobei das drahtlose Tonausgabegerät so konfiguriert ist, dass es nach dem Pairing ausgewählte Netzwerkadressinformationen an das drahtlose Audioübertragungsgerät sendet, wobei das drahtlose Audioübertragungsgerät so konfiguriert ist, dass es drahtlose Audiodaten auf der Grundlage der ausgewählten Netzwerkadressinformationen überträgt, und wobei das drahtlose Tonausgabegerät so konfiguriert ist, dass es einen Ton ausgibt, der den empfangenen drahtlosen Audiodaten entspricht.

14. Drahtloses Tonausgabesystem nach Anspruch 13, wobei das drahtlose Tonausgabegerät das drahtlose Tonausgabegerät nach einem der Ansprüche 7 bis 12 umfasst.

## Revendications

1. Dispositif de transmission audio sans fil (MBX) comprenant:
un émetteur-récepteur (106) configuré pour transmettre sans fil un signal audio à au moins un dispositif de sortie audio sans fil; et
un processeur (670) configuré pour commander l'émetteur-récepteur,
dans lequel, après la mise sous tension, l'émetteur-récepteur (635) est configuré pour transmettre une trame de balise comprenant des informations d'adresses de réseau multiples disponibles concernant une pluralité d'adresses de réseau disponibles, et, après l'appairage, est configuré pour recevoir des informations d'adresse de réseau sélectionnées provenant d'un dispositif de sortie audio sans fil appairé, et est configuré pour transmettre des données audio sans fil en fonction des informations d'adresse de réseau sélectionnées.

2. Dispositif de transmission audio sans fil selon la revendication 1, dans lequel les informations d'adresses de réseau multiples disponibles comprennent des informations dynamiques pour le dispositif de sortie audio sans fil pour sélectionner un réseau.

3. Dispositif de transmission audio sans fil selon l'une quelconque des revendications 1 à 2, dans lequel l'émetteur-récepteur (635) est configuré pour mettre à jour une partie des informations d'adresses de réseau multiples disponibles après l'appairage.

4. Dispositif de transmission audio sans fil selon l'une quelconque des revendications 1 à 3, dans lequel les informations d'élément spécifique au fournisseur contenues dans la trame de balise comprennent les informations d'adresses de réseau multiples disponibles.

5. Dispositif de transmission audio sans fil selon la revendication 4, dans lequel les informations d'élément spécifique au fournisseur contenues dans la trame de balise comprennent des informations d'adresse réseau (adresse IP de passerelle) du dispositif de transmission audio sans fil, des informations de comptage de bits à utiliser comme de masque de sous-réseau, des informations de préfixe permettant au dispositif de sortie audio sans fil de sélectionner un réseau, et des informations dynamiques permettant au dispositif de sortie audio sans fil de sélectionner un réseau.

6. Dispositif de transmission audio sans fil selon la revendication 5, dans lequel les informations d'élément spécifique au fournisseur dans la trame de balise comprennent en outre des informations d'adresse de réseau d'un service de noms de domaine (DNS).

7. Dispositif de sortie audio sans fil (SPK-A~SPK-D) comprenant:
un émetteur-récepteur (735) configuré pour recevoir sans fil un signal audio provenant d'un dispositif de transmission audio sans fil;
un dispositif de sortie audio (785) configuré pour émettre un son sur la base du signal audio reçu par l'émetteur-récepteur; et
un processeur (770) configuré pour commander le dispositif de sortie audio,
dans lequel, après la mise sous tension, l'émetteur-récepteur (735) est configuré pour recevoir une trame de balise comprenant des informations d'adresses de réseau multiples disponibles concernant une pluralité d'adresses de réseau disponibles provenant du dispositif de transmission audio sans fil, et, après l'appairage, est configuré pour transmettre des informations d'adresse de réseau sélectionnées parmi des informations d'adresses de réseau multiples disponibles au dispositif de transmission audio sans fil appairé, et est configuré pour recevoir des données audio sans fil en fonction des informations d'adresse de réseau sélectionnées en provenant du dispositif de transmission audio sans fil.

8. Dispositif de sortie audio sans fil selon la revendication 7, dans lequel les informations d'adresses de réseau multiples disponibles comprennent des informations dynamiques permettant au dispositif de sortie audio sans fil de sélectionner un réseau.

9. Dispositif de sortie audio sans fil selon la revendication 8, dans lequel l'émetteur-récepteur (735) est configuré pour sélectionner des informations relatives à l'une parmi la pluralité d'adresses de réseau disponibles, sur la base des informations dynamiques permettant au dispositif de sortie audio sans fil de sélectionner un réseau, et pour transmettre les informations d'adresse réseau sélectionnée au dispositif de transmission audio sans fil appairé.

10. Dispositif de sortie audio sans fil selon l'une quelconque des revendications 7 à 9, dans lequel les informations relatives à un élément spécifique au fournisseur dans la trame de balise comprennent les informations d'adresses de réseau disponibles.

11. Dispositif de sortie audio sans fil selon la revendication 10, dans lequel les informations d'élément spécifique au fournisseur dans la trame de balise comprennent des informations d'adresse réseau (adresse IP de passerelle) du dispositif de transmission audio sans fil, des informations de comptage de bits à utiliser comme de masque de sous-réseau, des informations de préfixe permettant au dispositif de sortie audio sans fil de sélectionner un réseau, et des informations dynamiques permettant au dispositif de sortie audio sans fil de sélectionner un réseau.

12. Dispositif de sortie audio sans fil selon la revendication 11, dans lequel les informations d'élément spécifique au fournisseur dans la trame de balise comprennent en outre des informations d'adresse de réseau d'un service de noms de domaine (DNS).

13. Système de sortie audio sans fil (300) comprend :
un dispositif de transmission audio sans fil (MBX) selon l'une quelconque des revendications 1 à 6; et
au moins un dispositif de sortie audio sans fil (SPK-A~SPK-D),
dans lequel, après la mise sous tension, le dispositif de transmission audio sans fil est configuré pour transmettre une trame de balise comprenant des informations d'adresses de réseau multiples disponibles, et après l'appairage, le dispositif de sortie audio sans fil est configuré pour transmettre les informations d'adresse de réseau sélectionnées au dispositif de transmission audio sans fil; le dispositif de transmission audio sans fil est configuré pour transmettre sans fil des données audio en fonction des informations d'adresse de réseau sélectionnées, et le dispositif de sortie audio sans fil est configuré pour émettre un son correspondant aux données audio sans fil reçues.

14. Système de sortie audio sans fil selon la revendication 13, dans lequel le dispositif de sortie audio sans fil comprend le dispositif de sortie audio sans fil selon l'une quelconque des revendications 7 à 12.
